# EUROPÄISCHE PATENTSCHRIFT

(11) **EP 4 614 054 B1**
(45) Veröffentlichungstag und Bekanntmachung des Hinweises auf die Patenterteilung: **31.12.2025**
(21) Anmeldenummer: 24161096.3
(22) Anmeldetag: 04.03.2024
(51) Int. Cl.: F16P 3/14

(54) **ÜBERWACHUNGSEINRICHTUNG UND VERFAHREN ZUM BETRIEB EINER ÜBERWACHUNGSEINRICHTUNG**
MONITORING DEVICE AND METHOD FOR OPERATING A MONITORING DEVICE
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 10.09.2025
(73) Patentinhaber: Leuze electronic GmbH + Co KG, 73277 Owen/Teck (DE)
(72) Erfinder: Eder, Alexander, 86928 Hofstetten (DE)
(74) Vertreter: Ruckh, Rainer Gerhard

(56) Entgegenhaltungen:
- EP-A1- 3 415 804
- EP-A1- 3 882 505
- EP-B1- 3 671 289

## Beschreibung

Die Erfindung betrifft eine Überwachungseinrichtung und ein Verfahren zum Betrieb einer Überwachungseinrichtung.

Derartige Überwachungseinrichtungen werden in der Sicherheitstechnik, insbesondere im Bereich des Personenschutzes eingesetzt. Die Überwachungseinrichtung weist typischerweise einen optischen Sicherheitssensor in Form eines Lichtvorhangs auf, der einen Sicherheitsausgang zum Steuern des Betriebs einer gefahrbringenden Maschine aufweist. Mit dem Lichtvorhang wird ein flächiger Überwachungsbereich im Bereich dieser Maschine überwacht. Wird kein Objekt mit dem Lichtvorhang erkannt, generiert dieser an den Sicherheitsausgängen Ausgangssignale, mit denen der Betrieb der Maschine freigegeben wird. Wird jedoch mit dem Lichtvorhang ein Objekt erkannt, generiert der Lichtvorhang ein Sicherheitssignal in Form eines Abschaltens der Sicherheitsausgänge, sodass zur Vermeidung von Gefahrensituationen die Maschine stillgesetzt wird.

Da es oftmals erforderlich ist, nichtsicherheitskritische Objekte wie zu bearbeitende Werkstücke durch den vom Lichtvorhang erfassten Überwachungsbereich der Maschine zuzuführen, ohne dass dann der Lichtvorhang durch ein Sicherheitssignal die Maschine stillsetzt, ist die Überwachungseinrichtung mit einer Mutingfunktion ausgestattet. Hierzu sind dem Lichtvorhang Mutingsensoren vorgeordnet. Wird mit den Mutingsensoren ein nichtsicherheitskritisches Objekt als zulässiges Objekt erkannt, wird der Lichtvorhang gemutet, das heißt überbrückt, sodass dieser bei Passieren des zulässigen Objekts kein Sicherheitssignal generiert. Damit wird die Verfügbarkeit der Maschine erhöht, da das zulässige Objekt den vom Lichtvorhang überwachten Überwachungsbereich passieren kann, ohne dass der Lichtvorhang ein die Maschine stillsetzendes Sicherheitssignal generiert.

Nachteilig hierbei ist jedoch der durch die erforderlichen Mutingsensoren erhöhte konstruktive Aufwand der Überwachungseinrichtung.

Die EP 3 415 804 A1 betrifft eine Überwachungseinrichtung mit wenigstens einem optischen Sicherheitssensor, welcher zur Überwachung eines flächigen oder räumlichen Überwachungsbereichs ausgebildet ist, mit einer dem Sicherheitssensor zugeordneten Sicherheitsausgangsschaltung mit einer Anordnung von Sicherheitsausgängen, welche abhängig von Signalen des Sicherheitssensors gesteuert sind und mit Umschaltmitteln, mittels derer wenigstens ein Schutzfeld und/oder wenigstens ein Signalfeld aktivierbar ist. Der Sicherheitssensor generiert ein Sicherheitssignal in Form eines Abschaltens des Sicherheitsausgangs, falls mit dem Sicherheitssensor ein Objekt innerhalb des aktivierten Schutzfelds detektiert wird, oder falls innerhalb eines vorgegebenen Zeitintervalls kein zulässiges Objekt innerhalb des aktivierten Signalfelds detektiert wird.

Die EP 3 671 289 B1 betrifft eine Sensoranordnung mit einem als optischer Sensor ausgebildeten Sensor zur Erfassung von Objekten in einem Überwachungsbereich, wobei der Sensor für eine Verfolgung eines entlang einer definierten, vorgegebenen Bahnkurve bewegten Transferobjekts ausgebildet ist, wobei im Sensor ein Konturerkennungsfeld und ein Überwachungsschutzfeld abhängig von der Position des Transferobjekts aktiviert sind, wobei das Konturerkennungsfeld dem Überwachungsschutzfeld in Richtung des Transferobjekts vorgelagert ist und das Transferobjekt vom Überwachungsschutzfeld ausgespart ist, und wobei der Sensor bei Eindringen eines Objekts in das Überwachungsschutzfeld eine Sicherheitsfunktion auslöst. Im Sensor ist eine Sequenz von Paaren von Konturerkennungsfeldern und Überwachungsschutzfeldern gespeichert, wobei abhängig von der aktuellen Position des Transferobjekts ein Konturerkennungsfeld und ein zugeordnetes Überwachungsschutzfeld aktiviert ist.

Die EP 3 882 505 A1 betrifft eine Überwachungseinrichtung mit einem optischen Sensor, mittels dessen eine Objektüberwachung innerhalb eines Schutzfeldes durchgeführt wird. Zwei Konturerkennungsfelder mit einander zumindest näherungsweise entsprechenden Längen, wobei die Längen so dimensioniert sind, dass die Konturerkennungsfelder über das Schutzfeld hervorstehen und dort zumindest teilweise nicht überlappen, sind vorgesehen. Entweder ist ein über das Schutzfeld hervorstehendes mit den ersten beiden Konturerkennungsfeldern zumindest teilweise nicht überlappendes drittes Konturerkennungsfeld vorgesehen und/oder es ist eine Zeitüberwachungseinheit vorgesehen, mittels derer die zeitliche Folge von Objekteingriffen in den beiden ersten Konturerkennungsfeldern überprüfbar ist. Abhängig davon, ob im ersten und/oder zweiten Konturerkennungsfeld ein Objekteingriff vorliegt oder nicht und abhängig davon ob im dritten Konturerkennungsfeld ein Objekteingriff vorliegt oder nicht und/oder abhängig von Kontrollsignalen der Zeitüberwachungseinheit wird das Schutzfeld vergrößert oder verkleinert. Die Erfindung betrifft weiterhin ein entsprechendes Verfahren.

Der Erfindung liegt die Aufgabe zugrunde, eine Überwachungseinrichtung der eingangs genannten Art bereitzustellen, mittels derer bei hoher Funktionalität ein hoher Sicherheitsstandard realisiert ist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor, welcher zur Überwachung eines flächigen oder räumlichen Überwachungsbereichs ausgebildet ist. Durch Umschaltmittel sind ein Schutzfeld und wenigstens ein dem Schutzfeld zugeordnetes Signalfeld aktivierbar. Der Sicherheitssensor generiert ein eine Sicherheitsfunktion auslösendes Sicherheitssignal nur dann, wenn dieser ein Objekt im Schutzfeld detektiert und innerhalb eines vorgegebenen Zeitintervalls kein Objekt im wenigstens einen Signalfeld detektiert. Eine Feldumschaltung in Form einer Umschaltung eines Schutzfelds und des zugeordneten wenigstens einen Signalfelds ist nur dann freigegeben, wenn mit dem Sicherheitssensor ein Objekt im Signalfeld detektiert wird.

Die Erfindung betrifft weiterhin ein entsprechendes Verfahren.

Mit der erfindungsgemäßen Überwachungseinrichtung und mit dem damit realisierten Verfahren zur Überwachung eines Überwachungsbereichs wird eine fehlersichere Überwachungsfunktion realisiert, mit der insbesondere ein Gefahrenbereich an einer Anlage, insbesondere eines Fahrzeugs, abgesichert wird.

Die Grundfunktion der Sicherheitsvorrichtung besteht darin, dass innerhalb eines Schutzfelds Objekte erfasst werden, die zu einer Gefährdung führen können. Wird demzufolge ein Objekt innerhalb des Schutzfelds erkannt, generiert der wenigstens eine Sicherheitssensor ein Sicherheitssignal, das eine Sicherheitsfunktion auslöst. Insbesondere wird die zu sichernde Anlage in einen sicheren Zustand überführt, insbesondere stillgesetzt.

Erfindungsgemäß wird mit der Überwachungseinrichtung weiterhin eine Überwachungsfunktion dadurch realisiert, dass für den Sicherheitssensor wenigstens ein Signalfeld simultan mit dem Schutzfeld aktiviert ist, ist innerhalb dessen sich nicht sicherheitskritische Objekte aufhalten oder bewegen können, ohne dass der Sicherheitssensor die Sicherheitsfunktion auslöst.

Dadurch wird die Verfügbarkeit der Überwachungseinrichtung erhöht, ohne das Sicherheitsniveau der mit der Überwachungseinrichtung realisierten Überwachung zu beeinträchtigen.

Nicht sicherheitskritische Objekte, die keine Gefährdungen von Personen hervorrufen, können beispielsweise von stationären Objekten wie Maschinenteilen, Wänden oder dergleichen gebildet sein. Ist der Sicherheitssensor auf einem Fahrzeug angeordnet, ändern sich die Positionen derartiger Objekte relativ zum Sicherheitssensor, wenn sich das Fahrzeug bewegt. Dabei wird das Fahrzeug insbesondere entlang definierter Bahnen bewegt, so dass der Fahrzustand, insbesondere Position und Geschwindigkeit des Fahrzeugs, stets bekannt ist. Beispielsweise kann das Fahrzeug von einem Querverschiebewagen gebildet sein. Dasselbe gilt, wenn mit dem Sicherheitssensor eine stationäre Anlage überwacht wird, welcher mit Transportfahrzeugen nicht sicherheitskritische Objekte, wie Werkstücke zugeführt werden.

Diesen Randbedingungen wird einerseits dadurch Rechnung getragen, dass der Sicherheitssensor nur dann ein Sicherheitssignal generiert, wenn mit diesem im Schutzfeld ein Objekt detektiert wird und innerhalb eines vorgegebenen Zeitintervalls, d.h. einer Erwartungszeit für das Vorhandensein eines nicht sicherheitskritischen Objekts, im Signalfeld kein Objekt erkannt wird.

Dabei ist es bei der erfindungsgemäßen Überwachungseinrichtung nicht erforderlich, dass der Sicherheitssensor ein Objekt im Signalfeld, beispielsweise durch eine Konturerfassung, als nichtsicherheitskritisch erkennt und klassifiziert. Vielmehr kommt es nur auf das Vorhandensein eines Objekts im Signalfeld an.

Natürlich kann zusätzlich auch eine Objektidentifikation anhand einer Konturerfassung durchgeführt werden.

Da sich, wie ausgeführt, nicht sicherheitskritische Objekte relativ zum Sicherheitssensor bewegen können, ist erfindungsgemäß eine Feldumschaltung vorgesehen, bei der eine Umschaltung des jeweils aktivierten Schutzfelds und wenigstens eines Signalfelds auf ein neues Schutzfeld und wenigstens ein neues Signalfeld erfolgt.

Erfindungsgemäß wird eine solche Feldumschaltung nur dann freigegeben, wenn mit dem Sicherheitssensor im wenigstens einen Signalfeld ein Objekt erkannt wird, d.h. wenn ein nicht sicherheitskritisches Objekt vorhanden ist. Dadurch wird ein an die aktuelle Applikationssituation angepasster Umschaltvorgang realisiert, wodurch fehlerhafte Aktivierungen von Schutzfeldern und Signalfeldern, die zu undefinierten Zuständen führen können und so zu Gefahrensituationen führen können, vermieden werden.

Ein Beispiel hierfür ist ein Sicherheitssensor, der an einem Querverschiebewagen montiert ist. Wird das Fahrzeug auf eine Wand, d.h. ein nicht sicherheitskritisches Objekt zubewegt, so wird ab einem bestimmten Zeitpunkt die Wand im Signalfeld des Sicherheitssensor erkannt.

Ist dies der Fall, kann das Schutzfeld verkleinert werden, damit die Wand nicht in das Schutzfeld ragt, was zu einer unnötigen Auslösung der Sicherheitsfunktion führen würde.

Mit der erfindungsgemäßen Feldumschaltung wird eine an diese sich verändernde Situation optimierte Anpassung des Schutzfelds und des zugehörigen Signalfelds erreicht, was die Funktionalität der Überwachungseinrichtung signifikant erhöht.

Gemäß einer ersten Variante ist jeweils nur ein Schutzfeld und ein Signalfeld aktiviert.

Gemäß einer zweiten Variante sind jeweils ein Schutzfeld und zwei Signalfelder aktiviert. Eine Umschaltung eines Schutzfelds und zweier Signalfelder ist nur dann freigegeben, wenn nur in einem der Signalfelder ein vom Sicherheitssensor registrierter Objekteingriff vorhanden ist.

Vorteilhaft wird in diesem Fall bei einem aktivierten Schutzfeld und zwei aktivierten Signalfeldern der Sicherheitssensor ein Sicherheitssignal generiert, wenn in keinem oder in beiden Signalfeldern gleichzeitig ein Objekteingriff registriert wird.

Generell ist es vorteilhaft, wenn wenigstens ein Signalfeld über den Rand des Schutzfelds hervorsteht.

Anhand derartiger Signalfelder kann rechtzeitig vor Eindringen eines nicht sicherheitskritischen Objekts in das aktivierte Schutzfeld eine Feldumschaltung initiiert werden, wodurch eine Anpassung des Schutzfelds an das sich nähernde nicht sicherheitskritische Objekt möglich ist. Dadurch kann ein unnötiges Auslösen einer Sicherheitsfunktion verhindert werden.

Gemäß einer vorteilhaften Ausgestaltung weist die Überwachungseinrichtung wenigstens eine Steuerung auf, welche eine Anfrage für eine Feldumschaltung an den Sicherheitssensor sendet. Der Sicherheitssensor liest auf die Anfrage Informationen über Objekteingriffe in dem oder in den Signalfeldern an die oder eine weitere Steuerung aus. Diese Feldumschaltung wird freigegen, falls in dem oder in einem Signalfeld ein Objekteingriff vorliegt.

Dadurch ist eine sichere, an die aktuell mit dem Sicherheitssensor durchgeführte Schutzfeldüberwachung angepasste Feldumschaltung gewährleistet.

Eine wesentliche Sicherheitsmaßnahme bei der Feldumschaltung besteht darin, dass der Sicherheitssensor das Sicherheitssignal generiert, wenn bei einer Anfrage der Steuerung kein Obj ekteingriff in dem oder in einem Signalfeld vorliegt.

Damit wird eine fehlangepasste Feldumschaltung sicher vermieden.

Gemäß einer ersten Variante ist nur eine Steuerung in Form einer sicheren Steuerung vorhanden.

In diesem Fall übernimmt dieselbe sichere Steuerung die Durchführung der Anfrage an den Sicherheitssensor für eine Feldumschaltung als auch die folgende Prüfung der Antwort des Sicherheitssensors, ob ein Objekteingriff im wenigstens einen Signalfeld vorliegt und abhängig davon die Freigabe der Feldumschaltung.

Gemäß einer zweiten Variante ist die die Anfrage sendende Steuerung eine nicht sichere Steuerung. Die die Feldumschaltung freigebende Steuerung ist eine sichere Steuerung.

Auch in diesem Fall wird die Freigabe der Feldumschaltung durch eine sichere Steuerung kontrolliert, wodurch die sicherheitstechnischen Anforderungen für eine sichere Feldumschaltung erfüllt sind.

Die sichere Steuerung weist dabei wie der Sicherheitssensor einen fehlersicheren Aufbau auf, der insbesondere durch eine mehrkanalige Rechnerstruktur realisiert wird. Weiterhin sind bei der sicheren Steuerung wie auch bei dem Sicherheitssensor fehlersichere Eingangs- und Ausgangsstrukturen vorgesehen, was durch eine zweikanalige Auslegung vor Ein- und Ausgängen oder durch Testung vor Ein- und Ausgängen mit Testsignalen erreicht werden kann.

Die zweite Variante mit einer separaten nicht sicheren Steuerung und einer sicheren Steuerung zur Kontrolle der Feldumschaltung eignet sich insbesondere für Ausbildungen der Überwachungseinrichtung, bei welchen der Sicherheitssensor an oder auf einem von einer Fahrzeugsteuerung gesteuerten Fahrzeug montiert ist, wobei dessen Vorfeld mit dem Sicherheitssensor überwacht wird.

In diesem Fall ist die nicht sichere Steuerung von der Fahrzeugsteuerung gebildet.

Dann generiert die Fahrzeugsteuerung die Anfrage abhängig vom Fahrzustand des Fahrzeugs.

Der Fahrzustand, insbesondere Position und Geschwindigkeit des Fahrzeugs wird insbesondere durch eine geeignete Sensorik am Fahrzeug erfasst.

Die Auswahl des aktuellen Schutzfelds und Signalfelds kann dann durch Generierung entsprechender Anfragen von Feldumschaltungen an den Sicherheitssensoren initiiert werden.

Der Sicherheitssensor kann generell als Radarsensor oder als optischer Sensor ausgebildet sein. Der optische Sensor kann prinzipiell als Kamerasensor ausgebildet sein. Besonders vorteilhaft ist der Sicherheitssensor ein Flächendistanzsensor, d.h. ein scannender Distanzsensor.

Die Erfindung wird im Folgenden anhand der Zeichnungen erläutert. Es zeigen:
- Figur 1:: Ausführungsbeispiel der erfindungsgemäßen Überwachungseinrichtung.
- Figur 2:: Erstes Beispiel eines Sicherheitssensors in Form eines Flächendistanzsensors für die Sicherheitsvorrichtung gemäß Figur 1.
- Figur 3:: Zweites Beispiel eines Sicherheitssensors in Form eines Flächendistanzsensors für die Sicherheitsvorrichtung gemäß Figur 1.
- Figuren 4 a-d:: Sicherheitssensor der Überwachungseinrichtung gemäß Figur 1 mit unterschiedlichen aktivierten Schutzfeldern und Signalfeldern.

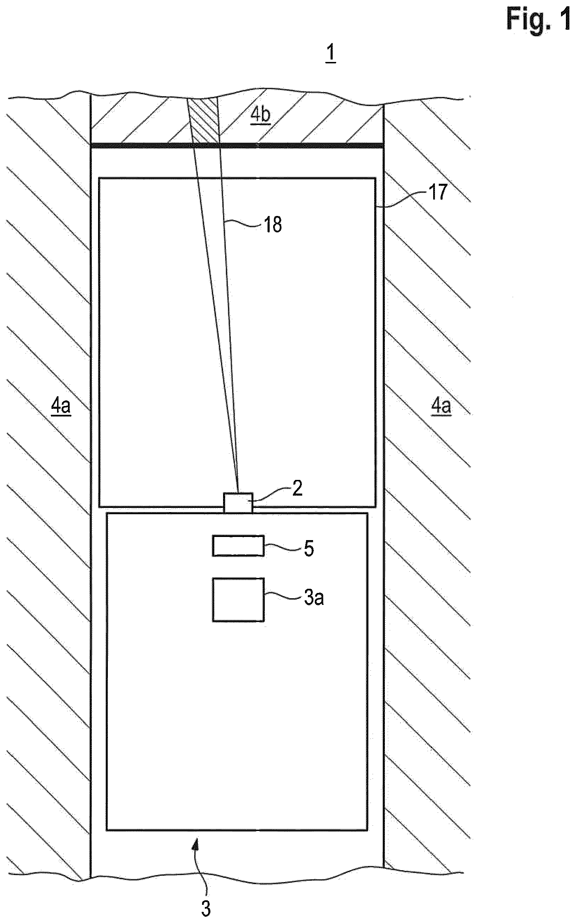

Figur 1 zeigt stark schematisiert ein Ausführungsbeispiel der erfindungsgemäßen Überwachungseinrichtung 1, die einen Sicherheitssensor 2 aufweist.

Der Sicherheitssensor 2 ist auf einem Fahrzeug in Form eines Querverschiebewagen 3 angebracht.

Der Querverschiebewagen 3 fährt in einem Gang, der seitlich von stationären Arbeitsstationen 4a oder dergleichen begrenzt ist. Stirnseitig ist der Gang von einer Wand 4b begrenzt.

Der Querverschiebewagen 3 wird von einer Fahrzeugsteuerung 3a gesteuert. Die Fahrzeugsteuerung 3a ist eine nicht sichere Steuerung, d.h. sie weist keine Mittel zur Fehlererkennung auf und besteht aus einer einkanaligen Rechnerstruktur.

Auf dem Querverschiebewagen 3 befindet sich weiterhin eine sichere Steuerung 5. Die sichere Steuerung 5 weist einen fehlersicheren Aufbau auf, was insbesondere dadurch erreicht wird, dass diese aus zwei sich gegenseitig zyklisch überwachenden Rechnereinheiten besteht. Weiterhin weist die sichere Steuerung 5 eine sichere Ein- / Ausgangsstruktur auf, was durch eine Zweikanaligkeit von Ein- und Ausgängen und/oder Testung von Ein- und Ausgängen mit in den Rechnereinheiten generierten Testsignalen werden kann.

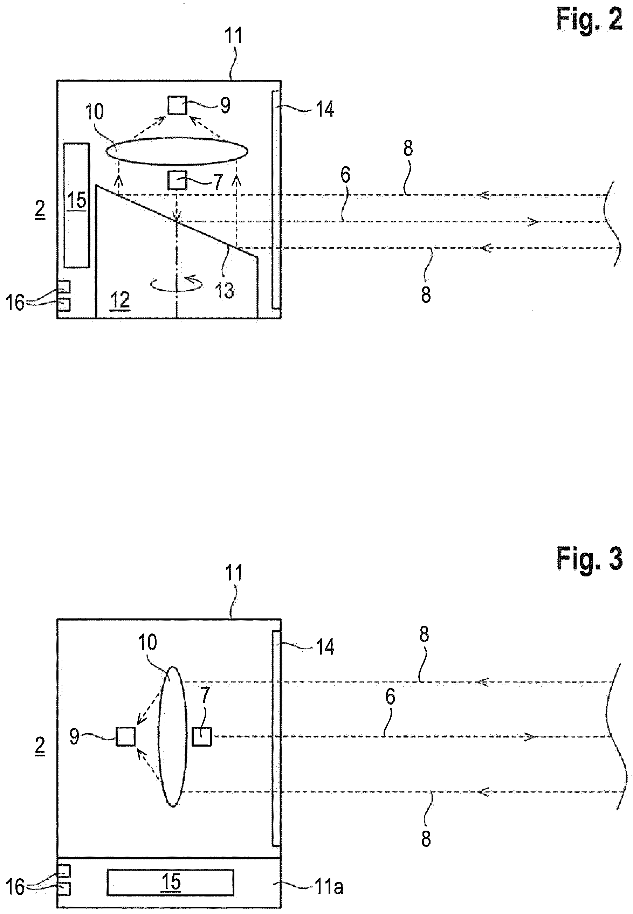

Der Sicherheitssensor 2 kann ein Radarsensor oder ein optischer Sensor sein. Für den Fall, dass der Sicherheitssensor 2 ein optischer Sensor ist, kann dieser ein Kamerasensor oder, wie in den Figuren 2 und 3 dargestellt, ein Flächendistanzsensor sein.

Der Flächendistanzsensor gemäß Figur 2 ist als Scanner ausgebildet. Ein Sendelichtstrahlen 6 emittierender Sender 7 und ein Empfangslichtstrahlen 8 empfangender Empfänger 9, welchem eine Empfangsoptik 10 vorgeordnet ist, bilden einen Distanzsensor. Die Komponenten des Distanzsensors sind stationär in einem Gehäuse 11 angeordnet. Über eine Ablenkeinheit 12, die einen um eine Drehachse drehbaren Umlenkspiegel 13 aufweist, werden die Sendelichtstrahlen 6 innerhalb eines Abtastbereichs periodisch abgelenkt und durch ein Fenster 14 aus dem Gehäuse 11 geführt, sodass mit den Sendelichtstrahlen 6 ein flächiger Überwachungsbereich 3 erfasst wird. Die vom Objekt zurückreflektierten Empfangslichtstrahlen 8 werden über die Ablenkeinheit 12 zum Empfänger 9 geführt. In einer im Flächendistanzsensor integrierten Auswerteeinheit 15 werden die mit dem Distanzsensor ermittelten Distanzwerte abhängig von der j eweiligen Winkelstellung erfasst. Zur Erfüllung der Anforderungen für den Einsatz im Bereich der Sicherheitstechnik weist die Auswerteeinheit 15 einen redundanten Aufbau auf, vorzugsweise in Form zweier sich zyklisch überwachender Rechnereinheiten. Weiterhin weist der Flächendistanzsensor zwei Sicherheitsausgänge 16 auf, die von der Auswerteeinheit 15 angesteuert werden.

Die Ausgänge bilden eine fehlersichere, redundante Ausgangsstruktur, über welche Ausgangssignale der Sicherheitssensoren 2 ausgegeben werden. Die Ausgangssignale sind im vorliegenden Fall als binäre Schaltsignale ausgebildet.

Der Flächendistanzsensor gemäß Figur 3 unterscheidet sich von der Ausführungsform der Figur 3 dadurch, dass das Gehäuse 11 einen rotierenden Messkopf bildet, der drehbar auf einem Sockel 11a aufsitzt. In diesem Fall wird die Ablenkbewegung der Sendelichtstrahlen 6 dadurch erhalten, dass mit dem Messkopf der gesamte Distanzsensor gedreht wird.

Mit beiden Flächendistanzsensoren können die Sendelichtstrahlen 6 in einem großen Winkelbereich geführt werden, der beispielsweise 180°umfasst.

Wie Figur 1 zeigt, wird mit dem Sicherheitssensor 2 der Überwachungseinrichtung 1 das Vorfeld des Querverschiebewagens 3 überwacht.

Figur 1 zeigt dabei eine Situation, bei der im Sicherheitssensor 2 ein Schutzfeld 17 und ein Signalfeld 18 aktiviert sind. Mit dem Sicherheitssensor 2 wird fortlaufend geprüft, ob im Schutzfeld 17 und/oder im Signalfeld 18 ein Objekteingriff stattfindet.

Wie Figur 1 zeigt, ist das Schutzfeld 17 im vorliegenden Fall rechteckig ausgebildet, wobei die Breite des Schutzfelds 17 geringfügig kleiner, als die Breite des Gangs ist. Damit wird der Gangbereich mit dem Schutzfeld 17 in seiner gesamten Breite überwacht, ohne dass die den Gang begrenzenden Arbeitsstationen 4a in das Schutzfeld 17 ragen.

Wie Figur 1 weiter zeigt, führt der Sicherheitssensor 2 auch eine Überwachung in einem Signalfeld 18 durch. Das Signalfeld 18 erstreckt sich ausgehend vom Sicherheitssensor 2 über die gesamte Länge des Schutzfelds 17 und steht mit seinem vorderen Ende über das Signalfeld 18 hervor.

Wie aus Figur 1 ersichtlich, ragt die Wand in den über das Schutzfeld 17 hervorstehenden Bereich des Signalfelds.

Wird mit dem Sicherheitssensor 2 innerhalb eines vorgegebenen Zeitintervalls ein Objekt im Signalfeld 18 registriert und wird mit dem Sicherheitssensor 2 im Schutzfeld 17 kein Objekt detektiert, generiert der Sicherheitssensor 2 als Schaltsignal ein Freigabesignal mit dem im vorliegenden Fall die Fahrt des Querverschiebewagens 3 freigegeben ist.

Ist eine der beiden Bedingungen nicht erfüllt, generiert der Sicherheitssensor 2 als Schaltsignal ein Sicherheitssignal mit dem eine Sicherheitsfunktion ausgelöst wird. Die Sicherheitsfunktion besteht im vorliegenden Fall darin den Querverschiebewagen 3 in einen sicheren Zustand zu überführen, insbesondere anzuhalten.

Die Schaltsignale des Sicherheitssensors 2 werden an die Fahrzeugsteuerung 3a und auch an die sichere Steuerung 5 ausgegeben.

Bei der Fahrt des Querverschiebewagens 3 nähert sich dieser der Wand 4b oder fährt von dieser weg. Um eine Anpassung an diese Situation zu ermöglichen ist erfindungsgemäß eine Feldumschaltung vorgesehen, wobei mit einer Feldumschaltung eine Umschaltung des Schutzfelds 17 und des Signalfelds 18 erfolgt.

Die Steuerung und Kontrolle der Feldumschaltung erfolgt mit der Fahrzeugsteuerung 3a und der sicheren Steuerung 5. Die Fahrzeugsteuerung 3a sendet hierzu eine Anfrage für eine Feldumschaltung an den Sicherheitssensor 2. Erfindungsgemäß wird die Feldumschaltung nur dann freigegeben, wenn das Signalfeld 18 belegt ist, d.h. sich ein Objekt im Schutzfeld 17 befindet. Hierzu wird im Sicherheitssensor 2 auf die Anfrage der Fahrzeugsteuerung 3a ein entsprechendes Kontrollsignal an die sichere Steuerung 5 ausgegeben und dort kontrolliert.

Da die sichere Steuerung 5 fehlersicher ist, erfolgt die von der sicheren Steuerung 5 freigegebene Feldumschaltung ebenfalls fehlersicher.

Die Feldumschaltung wird dann freigegeben, wenn, wie Figur 1 zeigt, im Signalfeld 18 vom Sicherheitssensor 2 ein Objekteingriff registriert wird. Erhält der Sicherheitssensor 2 eine Anfrage für eine Feldumschaltung und ist diese Bedingung nicht erfüllt, generiert der Sicherheitssensor 2 das Sicherheitssignal mit dem die Sicherheitsfunktion ausgelöst wird.

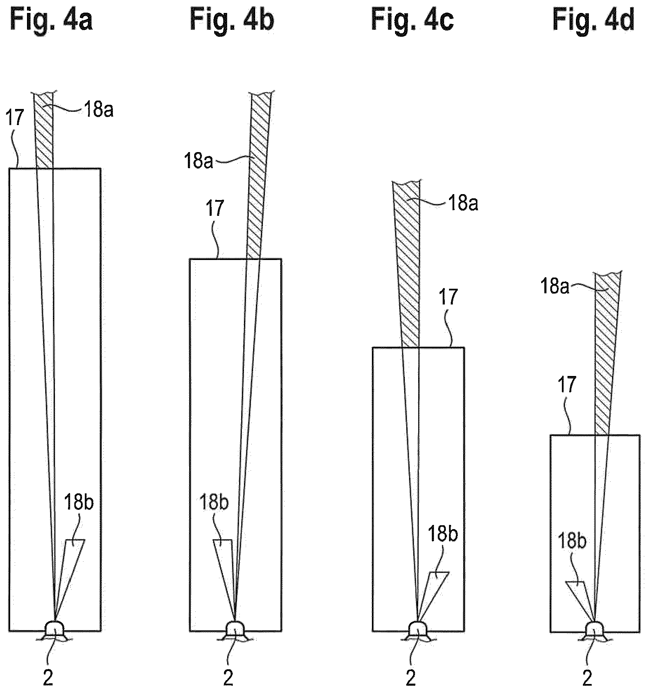

Die Figuren 4a bis 4d zeigen mehrere derartige Feldumschaltungen. Die Anordnung der Figuren 4a bis 4d unterscheidet sich von der Anordnung gemäß Figur 1 dadurch, dass immer ein Schutzfeld 17 und zwei Signalfelder 18a, 18b aktiviert sind.

Wie aus den Figuren 4a bis 4d ersichtlich, ragt das Signalfeld 18a über den Rand des Schutzfeld 17 hinaus, während das Signalfeld 18b vollständig innerhalb des Schutzfelds 17 liegt.

In diesem Fall generiert der Sicherheitssensor 2 nur dann ein Freigabesignal, wenn nur in einem der Signalfelder 18a, 18b innerhalb eines vorgegebenen Zeitintervalle ein Objekteingriff registriert wird und wenn im Schutzfeld 17 kein Objekt registriert wird. Ansonsten generiert der Sicherheitssensor 2 das Sicherheitssignal mit der die Sicherheitsfunktion ausgelöst wird.

Die Figuren 4a bis 4d zeigen vier durch Feldumschaltung erhaltene Konfigurationen des Schutzfelds 17 und der Signalfelder 18, 18a, 18b, wenn der Querverschiebewagen 3 auf die Wand 4b zufährt. Mit zunehmender Annäherung an die (in den Figuren 4a bis 4d) nicht dargestellte Wand 4b wird das Schutzfeld 17 ausgehend von Figur 4a bis Figur 4b fortlaufend verkleinert, wobei auch das Signalfeld 18a entsprechend angepasst wird.

### Bezugszeichenliste

- (1): Überwachungseinrichtung
- (2): Sicherheitssensor
- (3): Querverschiebewagen
- (3a): Fahrzeugsteuerung
- (4a): Arbeitsstation
- (4b): Wand
- (5): sichere Steuerung
- (6): Sendelichtstrahl
- (7): emittierender Sender
- (8): Empfangslichtstrahl
- (9): Empfänger
- (10): Empfangsoptik
- (11): Gehäuse
- 11a: Sockel
- (12): Ablenkeinheit
- (13): Umlenkspiegel
- (14): Fenster
- (15): Auswerteeinheit
- (16): Sicherheitsausgang
- (17): Schutzfeld
- (18, 18a, 18b): Signalfeld

## Patentansprüche

1. Überwachungseinrichtung (1) mit einem Sicherheitssensor (2), welcher zur Überwachung eines flächigen oder räumlichen Überwachungsbereichs ausgebildet ist, wobei durch Umschaltmittel ein Schutzfeld (17) und wenigstens ein dem Schutzfeld (17) zugeordnetes Signalfeld (18, 18a, 18b) aktivierbar sind, **dadurch gekennzeichnet, dass** der Sicherheitssensor (2) ein eine Sicherheitsfunktion auslösendes Sicherheitssignal nur dann generiert, wenn der Sicherheitssensor (2) ein Objekt im Schutzfeld (17) detektiert und innerhalb eines vorgegebenen Zeitintervalls kein Objekt im wenigstens einen Signalfeld (18, 18a, 18b) detektiert, und dass eine Feldumschaltung in Form einer Umschaltung eines Schutzfelds (17) und des zugeordneten wenigstens einen Signalfelds (18, 18a, 18b) nur dann freigegeben ist, wenn mit dem Sicherheitssensor (2) ein Objekt im Signalfeld (18, 18a, 18b) detektiert wird.

2. Überwachungseinrichtung (1) nach Anspruch 1, **dadurch gekennzeichnet, dass** jeweils nur ein Schutzfeld (17) und ein Signalfeld (18) aktiviert sind.

3. Überwachungseinrichtung (1) nach Anspruch 1, **dadurch gekennzeichnet, dass** jeweils ein Schutzfeld (17) und zwei Signalfelder (18a, 18b) aktiviert sind, wobei eine Umschaltung eines Schutzfelds (17) und zweier Signalfelder (18a, 18b) nur dann freigegeben ist, wenn nur in einem der Signalfelder (18a, 18b) ein vom Sicherheitssensor (2) registrierter Objekteingriff vorhanden ist.

4. Überwachungseinrichtung (1) nach Anspruch 3, **dadurch gekennzeichnet, dass** bei einem aktivierten Schutzfeld (17) und zwei aktivierten Signalfeldern (18a, 18b) der Sicherheitssensor (2) ein Sicherheitssignal generiert, wenn in keinem oder in beiden Signalfeldern (18a, 18b) gleichzeitig ein Objekteingriff registriert wird.

5. Überwachungseinrichtung (1) nach einem der Ansprüche 1 bis 4, **dadurch gekennzeichnet, dass** wenigstens ein Signalfeld (18a, 18b) über den Rand des Schutzfelds (17) hervorsteht.

6. Überwachungseinrichtung (1) nach einem der Ansprüche 1 bis 5, **dadurch gekennzeichnet, dass** diese wenigstens eine Steuerung aufweist, welche eine Anfrage für eine Feldumschaltung an den Sicherheitssensor (2) sendet, dass der Sicherheitssensor (2) auf die Anfrage Informationen über Objekteingriffe in dem oder in den Signalfeldern (18, 18a, 18b) an die oder eine weitere Steuerung ausliest, wobei in dieser die Feldumschaltung freigegen wird, falls in dem oder in einem Signalfeld (18, 18a, 18b) ein Objekteingriff vorliegt.

7. Überwachungseinrichtung (1) nach Anspruch 6, **dadurch gekennzeichnet, dass** der Sicherheitssensor (2) das Sicherheitssignal generiert, wenn bei einer Anfrage der Steuerung kein Obj ekteingriff in dem oder in einem Signalfeld (18, 18a, 18b) vorliegt.

8. Überwachungseinrichtung (1) nach einem der Ansprüche 6 oder 7, **dadurch gekennzeichnet, dass** nur eine Steuerung in Form einer sicheren Steuerung (5) vorhanden ist.

9. Überwachungseinrichtung (1) nach einem der Ansprüche 6 oder 7, **dadurch gekennzeichnet, dass** die die Anfrage sendende Steuerung eine nicht sichere Steuerung ist, und dass die die Feldumschaltung freigebende Steuerung eine sichere Steuerung (5) ist.

10. Überwachungseinrichtung (1) nach einem der Ansprüche 1 bis 9, **dadurch gekennzeichnet, dass** der Sicherheitssensor (2) an oder auf einem von einer Fahrzeugsteuerung (3a) gesteuerten Fahrzeug montiert ist, wobei dessen Vorfeld mit dem Sicherheitssensor (2) überwacht wird.

11. Überwachungseinrichtung (1) nach einem der Ansprüche 9 oder 10, **dadurch gekennzeichnet, dass** die nicht sichere Steuerung von der Fahrzeugsteuerung (3a) gebildet ist.

12. Überwachungseinrichtung (1) nach einem der Ansprüche 6 und 11, **dadurch gekennzeichnet, dass** die Fahrzeugsteuerung (3a) die Anfrage abhängig vom Fahrzustand des Fahrzeugs generiert.

13. Überwachungseinrichtung (1) nach einem der Ansprüche 11 oder 12, **dadurch gekennzeichnet, dass** das Fahrzeug ein Querverschiebewagen (3) ist.

14. Überwachungseinrichtung (1) nach einem der Ansprüche 1 bis 13, **dadurch gekennzeichnet, dass** der Sicherheitssensor (2) ein Flächendistanzsensor ist.

15. Verfahren zum Betrieb einer Überwachungseinrichtung (1) mit einem Sicherheitssensor (2), welcher zur Überwachung eines flächigen oder räumlichen Überwachungsbereichs ausgebildet ist, wobei durch Umschaltmittel ein Schutzfeld (17) und wenigstens ein dem Schutzfeld (17) zugeordnetes Signalfeld (18, 18a, 18b) aktivierbar sind, **dadurch gekennzeichnet, dass** der Sicherheitssensor (2) ein eine Sicherheitsfunktion auslösendes Sicherheitssignal nur dann generiert, wenn der Sicherheitssensor (2) ein Objekt im Schutzfeld (17) detektiert und innerhalb eines vorgegebenen Zeitintervalls kein Objekt im wenigstens einen Signalfeld (18, 18a, 18b) detektiert, und dass eine Feldumschaltung in Form einer Umschaltung eines Schutzfelds (17) und des zugeordneten wenigstens einen Signalfelds (18, 18a, 18b) nur dann freigegeben ist, wenn mit dem Sicherheitssensor (2) ein Objekt im Signalfeld (18, 18a, 18b) detektiert wird.

## Claims

1. Monitoring device (1) with a safety sensor (2) which is designed to monitor a flat or spatial monitoring area, wherein a protective field (17) and at least one signal field (18, 18a, 18b) can be activated, **characterised in that** the safety sensor (2) only generates a safety signal triggering a safety function when the safety sensor (2) detects an object in the protective field (17) and no object is detected in the at least one signal field (18, 18a, 18b) within a predetermined time interval, and that a field switchover in the form of a switchover of a protective field (17) and the associated at least one signal field (18, 18a, 18b) is only enabled when an object is detected in the signal field (18, 18a, 18b) by the safety sensor (2).

2. Monitoring device (1) according to claim 1, **characterised in that** only one protective field (17) and one signal field (18) are activated at a time.

3. Monitoring device (1) according to claim 1, **characterised in that** one protective field (17) and two signal fields (18a, 18b) are activated at any one time, whereby switching of one protective field (17) and two signal fields (18a, 18b) is only enabled if there is an object intrusion registered by the safety sensor (2) in only one of the signal fields (18a, 18b).

4. Monitoring device (1) according to claim 3, **characterised in that**, when one protective field (17) and two signal fields (18a, 18b) are activated, the safety sensor (2) generates a safety signal if no object intrusion is registered in either or in both signal fields (18a, 18b) at the same time.

5. Monitoring device (1) according to one of claims 1 to 4, **characterised in that** at least one signal field (18a, 18b) protrudes beyond the edge of the protective field (17).

6. Monitoring device (1) according to one of claims 1 to 5, **characterised in that** it has at least one control unit which sends a request for a field switchover to the safety sensor (2), **in that** the safety sensor (2) reads out information about object intrusions in the or in the signal fields (18, 18a, 18b) to the or another control unit, whereby the field switching is enabled in the control unit if there is an object intrusion in the or in a signal field (18, 18a, 18b).

7. Monitoring device (1) according to claim 6, **characterised in that** the safety sensor (2) generates the safety signal if, in response to a request from the control unit, there is no object intrusion in the signal field or fields (18, 18a, 18b).

8. Monitoring device (1) according to one of claims 6 or 7, **characterised in that** only one control in the form of a safe control (5) is present.

9. Monitoring device (1) according to one of claims 6 or 7, **characterised in that** the control system sending the request is a non-safe control system and that the control system enabling the field switchover is a safe control system (5).

10. Monitoring device (1) according to one of claims 1 to 9, **characterised in that** the safety sensor (2) is mounted on or in a vehicle controlled by a vehicle control system (3a), the area in front of which is monitored by the safety sensor (2).

11. Monitoring device (1) according to one of claims 9 or 10, **characterised in that** the non-safe control is formed by the vehicle control (3a).

12. Monitoring device (1) according to one of claims 6 and 11, **characterised in that** the vehicle control system (3a) generates the request depending on the driving condition of the vehicle.

13. Monitoring device (1) according to one of claims 11 or 12, **characterised in that** the vehicle is a cross-transfer car (3).

14. Monitoring device (1) according to one of claims 1 to 13, **characterised in that** the safety sensor (2) is an area distance sensor.

15. Method for operating a monitoring device (1) with a safety sensor (2) which is designed to monitor a flat or spatial monitoring area, wherein a protective field (17) and at least one signal field (18, 18a, 18b) assigned to the protective field (17) can be activated by switching means, **characterised in that** the safety sensor (2) only generates a safety signal triggering a safety function when the safety sensor (2) detects an object in the protective field (17). 18b) can be activated, **characterised in that** the safety sensor (2) only generates a safety signal that triggers a safety function when the safety sensor (2) detects an object in the protective field (17) and no object is detected in said at least one signal field (18, 18a, 18b) within a predetermined time interval, and that a field switchover in the form of a switchover of a protective field (17) and said associated at least signal field (18, 18a, 18b) is only enabled if an object is detected in the signal field (18, 18a, 18b) with the safety sensor (2).

## Revendications

1. Dispositif de surveillance (1) comprenant un capteur de sécurité (2) qui est conçu pour surveiller une zone de surveillance plane ou spatiale, un champ de protection (17) et au moins un champ de signalisation (18, 18a, 18b) associés au champ de protection (17), **caractérisé en ce que** le capteur de sécurité (2) ne génère un signal de sécurité déclenchant une fonction de sécurité que lorsque le capteur de sécurité (2) détecte un objet dans le champ de protection (17) et qu'aucun objet n'est détecté dans ledit au moins un champ de signal (18, 18a, 18b) et **en ce qu'**une commutation de champ sous la forme d'une commutation d'un champ de protection (17) et d'au moins un champ de signal (18, 18a, 18b) associé n'est autorisée que si le capteur de sécurité (2) détecte un objet dans le champ de signal (18, 18a, 18b).

2. Dispositif de surveillance (1) selon la revendication 1, **caractérisé en ce que** seuls un champ de protection (17) et un champ de signalisation (18) sont activés à la fois.

3. Dispositif de surveillance (1) selon la revendication 1, **caractérisé en ce qu'**un champ de protection (17) et deux champs de signalisation (18a, 18b) sont activés, la commutation d'un champ de protection (17) et de deux champs de signalisation (18a, 18b) n'étant autorisée que lorsqu'il n'y a qu'un seul champ de signalisation (18a, 18b) est détectée par le capteur de sécurité (2).

4. Dispositif de surveillance (1) selon la revendication 3, **caractérisé en ce que**, lorsqu'un champ de protection (17) et deux champs de signalisation (18a, 18b) sont activés, le capteur de sécurité (2) génère un signal de sécurité si aucune intrusion d'objet n'est enregistrée dans aucun des champs de signalisation (18a, 18b) ou si une intrusion d'objet est enregistrée simultanément dans les deux champs de signalisation (18a, 18b).

5. Dispositif de surveillance (1) selon l'une des revendications 1 à 4, **caractérisé en ce qu'**au moins un champ de signalisation (18a, 18b) dépasse du bord du champ de protection (17).

6. Dispositif de surveillance (1) selon l'une des revendications 1 à 5, **caractérisé en ce qu'**il comporte au moins une commande qui envoie une requête pour une commutation de champ au capteur de sécurité (2), **en ce que** le capteur de sécurité (2) lit, en réponse à la requête, des informations sur des intrusions d'objets dans le ou les champs de signalisation (18, 18a, 18b) à la commande ou à une autre commande, dans laquelle la commutation de champ est validée s'il y a une intrusion d'objet dans le ou dans un champ de signal (18, 18a, 18b).

7. Dispositif de surveillance (1) selon la revendication 6, **caractérisé en ce que** le capteur de sécurité (2) génère le signal de sécurité lorsqu'il n'y a pas d'intrusion d'objet dans le ou les champs de signalisation (18, 18a, 18b) lors d'une demande de la commande.

8. Dispositif de surveillance (1) selon l'une des revendications 6 ou 7, **caractérisé en ce qu'**il n'existe qu'une seule commande sous la forme d'une commande sécurisée (5).

9. Dispositif de surveillance (1) selon l'une des revendications 6 ou 7, **caractérisé en ce que** la commande envoyant la demande est une commande non sécurisée et **en ce que** la commande autorisant la commutation de champ est une commande sécurisée (5).

10. Dispositif de surveillance (1) selon l'une des revendications 1 à 9, **caractérisé en ce que** le capteur de sécurité (2) est monté sur ou dans un véhicule commandé par une commande de véhicule (3a), dont la zone périphérique est surveillée par le capteur de sécurité (2).

11. Dispositif de surveillance (1) selon l'une des revendications 9 ou 10, **caractérisé en ce que** la commande non sécurisée est formée par la commande de véhicule (3a).

12. Dispositif de surveillance (1) selon l'une des revendications 6 et 11, **caractérisé en ce que** la commande du véhicule (3a) génère la requête en fonction de l'état de conduite du véhicule.

13. Dispositif de surveillance (1) selon l'une des revendications 11 ou 12, **caractérisé en ce que** le véhicule est un wagon à déplacement transversal (3).

14. Dispositif de surveillance (1) selon l'une des revendications 1 à 13, **caractérisé en ce que** le capteur de sécurité (2) est un capteur de distance de surface.

15. Procédé pour faire fonctionner un dispositif de surveillance (1) avec un capteur de sécurité (2) , qui est conçu pour surveiller une zone de surveillance plane ou spatiale, un champ de protection (17) et au moins un champ de signalisation (18, 18a, 18b) associés au champ de protection (17), **caractérisé en ce que** le capteur de sécurité (2) ne génère un signal de sécurité déclenchant une fonction de sécurité que lorsque le capteur de sécurité (2) détecte un objet dans le champ de protection (17) et qu'aucun objet n'est détecté dans au moins un champ de signal (18, 18a, 18b), et **en ce qu'**une commutation de champ sous la forme d'une commutation d'un champ de protection (17) et d'au moins un champ de signal (18, 18a, 18b) associé n'est autorisée que si le capteur de sécurité (2) détecte un objet dans le champ de signal (18, 18a, 18b).
